# EUROPÄISCHE PATENTSCHRIFT

(11) **EP 0 936 108 B1**
(45) Veröffentlichungstag und Bekanntmachung des Hinweises auf die Patenterteilung: **29.10.2003**
(21) Anmeldenummer: 99101077.8
(22) Anmeldetag: 25.01.1999
(51) Int. Cl.: B60R 13/07, B60J 7/02, B60R 21/20

(54) **Wasserablauf für ein Fahrzeugdach**
Water drainage for vehicle roof
Dispositif de drainage d'eau pour toit de véhicule

(30) Priorität: 11.02.1998 DE 19805468
(43) Veröffentlichungstag der Anmeldung: 18.08.1999
(73) Patentinhaber: Volkswagen Aktiengesellschaft, 38436 Wolfsburg (DE)
(72) Erfinder: Bleich, Bernhard, 38474 Tülau (DE)

(56) Entgegenhaltungen:
- EP-A- 0 694 444
- DE-A- 19 613 133
- GB-A- 2 206 849

## Beschreibung

Die Erfindung betrifft einen Wasserablauf eines Fahrzeugdachs nach dem Oberbegriff des Anspruchs 1. Ein derartiger Wasserablauf ist z.B. durch GB-A-2 206 849 bekannt.

Mit einem Schiebedach ausgerüstete Fahrzeugdächer besitzen entlang dem Öffnungsrand entlang der Schiebedächer im Fahrzeugdach Wasserauffangrinnen, an die wenigstens ein Wasserablaufschlauch angeschlossen ist, über den das in einer Wasserauffangrinne aufgefangene Wasser seitlich abgeleitet werden kann. Der Wasserablaufschlauch kann zu diesem Zweck beispielsweise über die C-Säule bis zur Unterseite des Fahrzeugs geführt werden, wo das Wasser zum Boden ablaufen kann.

Werden in einem Kraftfahrzeug Seitenairbags vorgesehen, so ist es für die Funktion der Seitenairbags günstig, wenn die Schußkanäle der Seitenairbags in den Seitenrändern des Fahrzeugdachs untergebracht sind. Dadurch ergibt sich jedoch die Problematik, daß der Wasserablauf bzw. der Wasserablaufschlauch eines Schiebedachs sich mit der Anordnung eines solchen Seitenairbags kreuzt.

Der Erfindung liegt die Aufgabe zugrunde, einen Wasserablauf für ein Fahrzeugdach zur Abführung des im Bereich eines Schiebedachs aufgefangenen Wassers zu schaffen, der es ermöglicht, an den Innenseiten des Fahrzeugs jeweils durchgehende Seitenairbags anzubringen.

Diese Aufgabe wird mit den Merkmalen des Anspruchs 1 gelöst.

Gemäß Anspruch 1 verläuft der Wasserablauf im Bereich der für einen Seitenairbag vorgesehenen Austrittsöffnung eines Schußkanals quer zum Schußkanal und der Seitenairbag durchtrennt beim Auslösen den Wasserablauf im Bereich des Schußkanals.

Der Wasserablauf besitzt also an der Stelle, wo er sich mit dem Seitenairbag bzw. mit dem Schußkanal des Seitenairbags kreuzt, eine Trennstelle, die auch als Sollbruchstelle bezeichnet werden kann. Beim Auslösen des Seitenairbags durchtrennt dieser den Wasserablauf beispielsweise dadurch, daß eine bestehende Schlauchverbindung gelöst oder ein Schlauchverbindungsstück aufgebrochen wird. Die seitliche Abführung des Wassers kann somit ohne großen konstruktiven Aufwand auch bei Verwendung eines am Seitenrand des Fahrzeugdachs angeordneten durchgehenden Seitenairbag erfolgen.

Gemäß einer bevorzugten Ausführungsform besitzt der Schußkanal ein im Querschnitt U-förmiges Profil mit Durchgangsöffnungen für den Wasserablauf, in die ein hülsenförmiger Schlauchverbinder eingesetzt ist, auf den an der einen Seite ein vom Fahrzeugdach kommender und auf der anderen Seite ein zum Fahrzeugseitenteil führender Wasserablaufschlauch aufgesteckt ist und der eine im Schußkanal zwischen den aufgesteckten Wasserablaufschläuchen befindliche Sollbruchstelle hat. Die Verwendung eines hülsenförmigen Schlauchverbinders mit Sollbruchstelle stellt eine kostengünstige Ausführung dar.

Der Schlauchverbinder mit Sollbruchstelle kann ein Formteil sein, das eine Ringnut zum Einsetzen in eine Durchgangsöffnung des Profils des Schußkanals hat. Zur Montage des derart ausgebildeten Schlauchverbinders sind keine zusätzlichen Befestigungselemente erforderlich. Die lösbare Verbindung im Bereich des Schußkanals kann vorteilhaft auch so ausgebildet sein, daß am Schußkanal unterhalb der für den Seitenairbag vorgesehenen Austrittsöffnung als Schlauchverbinder eine Schlauchmuffe angeordnet ist, an der zu beiden Seiten Wasserablaufschläuche des Wasserablaufs lösbar aufgesteckt sind. Beim Auslösen des Seitenairbags drückt dieser gegen den Wasserablaufschlauch, so daß der Wasserablaufschlauch nach unten gedrückt und aus der Schlauchmuffe herausgezogen wird. Der Seitenairbag kann sich somit ungehindert entfalten und seine Schutzfunktion für die Insassen übernehmen.

Die Schlauchmuffe kann aus einem elastischen Material gefertigt sein und/oder verschwenkbar im Bereich der Öffnung des Schußkanals angebracht sein. Besonders vorteilhaft ist es, die Schlauchmuffe im mittleren Bereich ihrer Mantelfläche mit einer elastischen Lasche zu versehen, über die die Schlauchmuffe am Profil des Schußkanals verschwenkbar befestigt ist. Die verschwenkbare Befestigung erleichtert das Abziehen des Wasserablaufschlauchs beim Auslösen des Seitenairbags.

Der Schlauchverbinder kann aus Gummi oder einem anderen elastischen oder nachgiebigen Material bestehen, um das Auftrennen des Wasserablaufs beim Auslösen des Seitenairbags zu erleichtern und um eine Beschädigung des Seitenairbags sicher zu vermeiden.

Anhand einer Zeichnung wird die Erfindung näher erläutert.

Es zeigen:
- Fig. 1: eine Teilansicht des Innenraums eines Kraftfahrzeugs mit Seitenairbag,
- Fig. 2: den vom Fahrzeugdach zur Fahrzeugseite führenden Wasserablauf, der den Schußkanal des in Figur 1 dargestellten Seitenairbags kreuzt,
- Fig. 3: den Schnitt A-A gemäß der in Figur 2 eingezeichneten Schnittlinie,
- Fig. 4: einen Schußkanal mit einem daran angebrachten Schlauchverbinder mit Sollbruchstelle und
- Fig. 5: eine vergrößerte Darstellung des in Figur 4 dargestellten Schlauchverbinders.

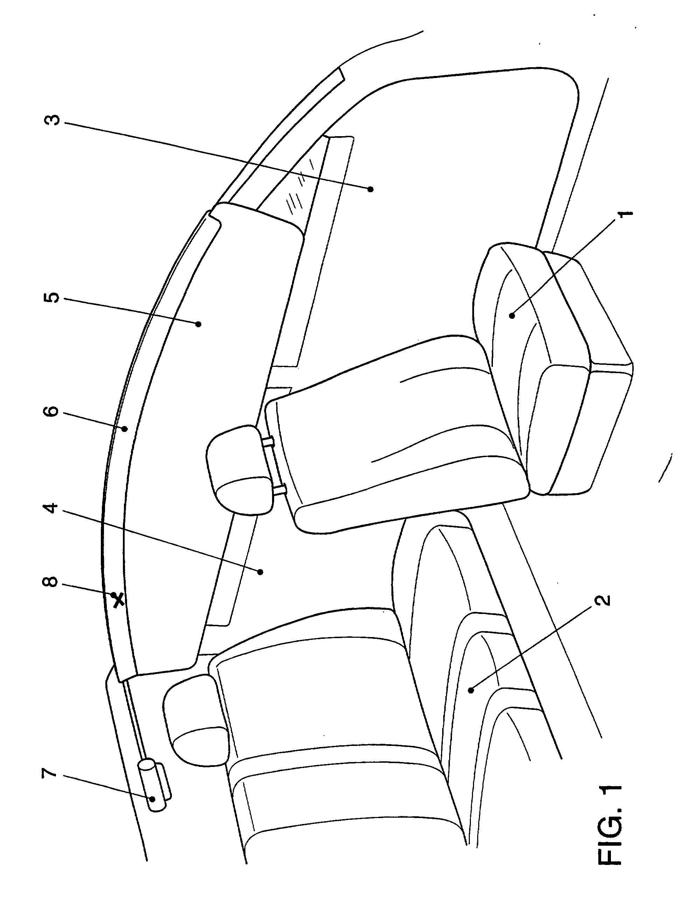

Die Darstellung von Figur 1 zeigt einen Vordersitz 1, eine Rücksitzbank 2, Seitentüren 3, 4 und einen ausgelösten Seitenairbag 5.

Der Seitenairbag 5 besitzt einen gebogen verlaufenden Schußkanal 6, in dem der Seitenairbag ursprünglich gefaltet einliegt. Über einen Gasgenerator 7 kann der Seitenairbag ausgelöst und in die hier dargestellte aufgeblasene Stellung gebracht werden.

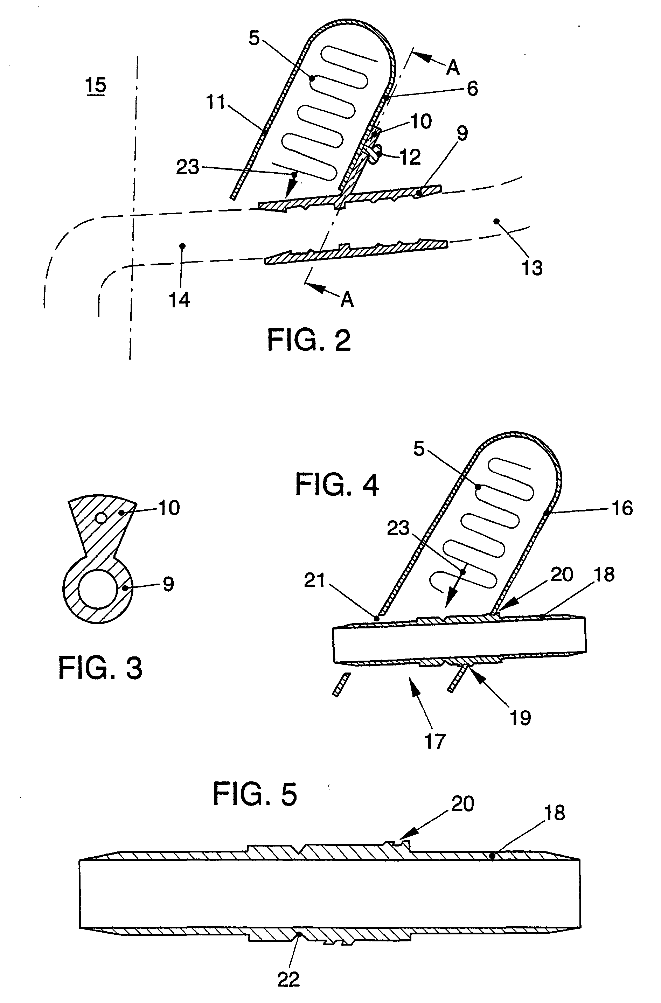

Da der Seitenairbag 5 mit seinem Schußkanal 6 im Seitenbereich des Fahrzeugdachs verläuft, kreuzt sich der Schußkanal 6 mit einem vom Fahrzeugdach zur Fahrzeugseite führenden Wasserablauf. Die Position des Kreuzungspunktes zwischen Schußkanal 6 und einem hier nicht näher dargestellten Wasserablauf kann beispielsweise an der mit 8 gekennzeichneten Stelle liegen. Um einen am Kreuzungspunkt 8 auftrennbaren Wasserablauf zu realisieren, ist gemäß Figur 2 ein Schlauchverbinder in Form einer Schlauchmuffe 9 vorgesehen, die im Längsschnitt dargestellt ist. Die Schlauchmuffe 9 ist über eine angespritzte, elastische Lasche 10 an dem U-förmigen Profil 11 des Schußkanals 6 mittels einer Niet 12 befestigt. Auf die Schlauchmuffe 9 sind zu beiden Seiten Wasserablaufschläuche 13, 14 aufgesteckt, die hier mit unterbrochenen Linien angedeutet sind. Der Wasserablaufschlauch 13 kommt von der hier nicht dargestellten Auffangrinne eines Schiebedachs, während der Wasserablaufschlauch 14 zur Fahrzeugseite 15 und von dort nach unten aus dem Fahrzeug führt. Der Wasserablaufschlauch 14 kann beispielsweise in der C-Säule der Fahrzeugseite 15 nach unten verlaufen.

Figur 3 zeigt den Schnitt A-A gemäß der in Figur 2 eingezeichneten Schnittlinie. Hier ist insbesondere die Form der von der Mantelfläche der Schlauchmuffe 9 abstehenden elastischen Lasche 10 ersichtlich.

Bei der in Figur 4 dargestellten Ausführung durchdringt der Wasserablauf einen U-förmig profilierten Schußkanal 16 im Bereich der Öffnung 17 des Schußkanals. Der Wasserablauf besitzt zu diesem Zweck einen als hülsenförmiges Formteil ausgebildeten Schlauchverbinder 18, auf den die in Figur 2 angedeuteten Wasserablaufschläuche 13, 14 aufsteckbar sind. Der Schlauchverbinder 18 besitzt eine Ringnut 20, mit der er in eine Durchgangsöffnung 19 am Schußkanal 16 eingesetzt ist. Der Schlauchverbinder 18 ragt einerseits an der ersten Durchgangsöffnung 19 und andererseits an einer zweiten Durchgangsöffnung 21 aus dem Schußkanal 16 heraus. An beiden Enden des Schlauchverbinders 18 können die Wasserablaufschläuche 13 und 14 von Figur 2 aufgesteckt werden.

In Figur 5 ist der Schlauchverbinder 18 gegenüber Figur 4 vergrößert dargestellt. Dieser besitzt im mittleren Bereich eine durch eine Ringkerbe 22 ausgebildete Sollbruchstelle, die eine Durchtrennung des Wasserablaufs beim Auslösen des Seitenairbags ermöglicht.

Es wird nun beschrieben, wie das Auftrennen des Wasserablaufs im Falle der Ausführungen gemäß Figur 2 und Figur 4 erfolgt.

Bei der Ausführung gemäß Figur 2 erfolgt die Auftrennung des Wasserablaufs, der durch die Wasserablaufschläuche 13, 14 und die Schlauchmuffe 9 im Bereich des Schußkanals 6 gebildet wird, dadurch, daß der im Profil 11 einliegende, gefaltete Seitenairbag 5 mittels Gasdruck in an sich bekannter Weise aufgeblasen wird, wodurch sich der Seitenairbag 5 in Pfeilrichtung 23 ausdehnt. Der gefaltete Seitenairbag 5 ist hier stark vereinfacht dargestellt.

Beim Entfalten des Seitenairbags 5 drückt dieser gegen die elastische und nachgiebig ausgebildete Schlauchmuffe 9, wodurch sich die Schlauchverbindung zwischen der Schlauchmuffe 9 und dem in sie eingesteckten Wasserablaufschlauch 14 auftrennt. Der Wasserablaufschlauch 14 rutscht aus der Schlauchverbindung 9 heraus, so daß der Weg für die Ausdehnung des Seitenairbags 5 freigegeben wird.

Bei der Ausführung gemäß Figur 4 erfolgt die Auftrennung des Wasserablaufs im Bereich des Schlauchverbinders 18 in der Weise, daß der sich unter hohem Druck schlagartig ausdehnende Seitenairbag 5 den Schlauchverbinder 18 an der Sollbruchstelle 22 durchtrennt. Ist der Schlauchverbinder 18 aus einem elastischen Material hergestellt, so läßt sich dieser vom sich ausbreitenden Seitenairbag 5 leicht wegdrücken, ohne daß eine Beschädigung des Seitenairbags 5 zu befürchten ist.

## Patentansprüche

1. Wasserablauf eines Fahrzeugdachs zur Abführung des im Bereich eines Schiebedachs im Fahrzeugdach aufgefangenen Wassers mit einem vom Fahrzeugdach zu einem Fahrzeugseitenteil führenden Wasserablaufschlauch (13, 14), von wo das Wasser nach unten aus dem Fahrzeug abläuft, **dadurch gekennzeichnet,**
**daß** der Wasserablaufschlauch im Bereich der für einen Seitenairbag (5) vorgesehenen Austrittsöffnung (17) eines Schußkanals (6, 16) quer zum Schußkanal (6, 16) verläuft und beim Auslösen des Seitenairbags (5) dieser den Wasserablaufschlauch im Bereich des Schußkanals (6, 16) durchtrennt.

2. Wasserablauf nach Anspruch 1, **dadurch gekennzeichnet,**
**daß** der Schußkanal (16) ein im Querschnitt U-förmiges Profil mit Durchgangsöffnungen (19, 21) für den Wasserablaufschlauch hat, in die ein hülsenförmiger Schlauchverbinder (18) eingesetzt ist, auf den an der einen Seite ein vom Fahrzeugdach kommender und auf der anderen Seite ein zum Fahrzeugseitenteil führender Teil des Wasserablaufschlauchs (13, 14) aufgesteckt ist und der eine im Schußkanal (16) zwischen den aufgesetzten Teilen (13, 14) des Wasserablaufschlauchs befindliche Sollbruchstelle (22) hat.

3. Wasserablaufschlauch nach Anspruch 2, **dadurch gekennzeichnet,**
**daß** der Schlauchverbinder (18) ein Formteil ist, das eine Ringnut (20) zum Einsetzen in eine Durchgangsöffnung (19) des Profils des Schußkanals (16) hat.

4. Wasserablauf nach Anspruch 1, **dadurch gekennzeichnet,**
**daß** am Schußkanal (6) unterhalb der für den Seitenairbag (5) vorgesehenen Austrittsöffnung als Schlauchverbinder eine Schlauchmuffe (9) angeordnet ist, an der zu beiden Seiten Teile (13, 14) das Wasserablaufschlauchs des Wasserablaufs lösbar aufgesteckt sind.

5. Wasserablauf nach Anspruch 4, **dadurch gekennzeichnet,**
**daß** die Schlauchmuffe (9) verschwenkbar befestigt ist.

6. Wasserablauf nach Anspruch 5, **dadurch gekennzeichnet,**
**daß** an der Schlauchmuffe (9) im mittleren Bereich ihrer Mantelfläche eine elastische Lasche (10) absteht, über die die Schlauchmuffe (9) am Profil (11) des Schußkanals (6) befestigt ist.

7. Wasserablauf nach einem der Ansprüche 2 bis 6, **dadurch gekennzeichnet,**
**daß** der Schlauchverbinder (9, 18) aus Gummi oder einem anderen elastischen Material besteht.

## Claims

1. Water drainage outlet of a vehicle roof for draining off the water collected in the vehicle roof in the area of a sliding roof, with a water drainage hose (13, 14) leading from the vehicle roof to a vehicle side part, from whence the water drains downwards out of the vehicle, **characterized in that** the water drainage hose runs in the area of the outlet opening (17) of a firing duct (6, 16) intended for a side airbag (5), transversely to the said firing duct (6, 16), and that when the side airbag (5) is triggered it severs the water drainage hose in the area of the firing duct (6, 16).

2. Water drainage outlet according to Claim 1, **characterized in that** the firing duct (16) has a U-shaped cross-sectional profile with passages (19, 21) for the water drainage hose, into which passages a sleeve-shaped hose connector (18) is inserted, to one side of which a part of the water drainage hose (13, 14) coming from the roof is attached, and to the other side of which a part of the water drainage hose (13, 14) leading to the vehicle side part is attached, and which has a predefined rupture point (22) situated in the firing duct (16) between the attached parts (13, 14) of the water drainage hose.

3. Water drainage hose according to Claim 2, **characterized in that** the hose connector (18) is a formed part, which has an annular groove (20) for insertion into a passage (19) of the profile of the firing duct (16).

4. Water drainage outlet according to Claim 1, **characterized in that** a hose sleeve (9), to which parts (13, 14) of the water drainage hose of the water drainage outlet are detachably attached on both sides, is arranged as hose connector on the firing duct (6) below the outlet opening provided for the side airbag (5).

5. Water drainage outlet according to Claim 4, **characterized in that** the hose sleeve (9) is fixed so that it can swivel.

6. Water drainage outlet according to Claim 5, **characterized in that** an elastic strap (10), by way of which the hose sleeve (9) is fixed to the profile (11) of the firing duct (6), projects from the hose sleeve (9) in the middle area of its circumferential surface.

7. Water drainage outlet according to any one of Claims 2 to 6, **characterized in that** the hose connector (9, 18) is composed of rubber or another elastic material.

## Revendications

1. Dispositif de drainage d'eau d'un toit de véhicule pour l'évacuation de l'eau recueillie dans la zone d'un toit ouvrant dans le toit du véhicule avec un tuyau de drainage de l'eau (13, 14) allant du toit du véhicule vers une partie latérale du véhicule, à partir d'où l'eau s'écoule hors du véhicule vers le bas, **caractérisé en ce que** le tuyau de drainage de l'eau s'étend transversalement au canal à forte pente (6, 16) dans la zone de l'ouverture de sortie (17) prévue pour un airbag latéral (5) d'un canal à forte pente (6, 16), et **en ce que** lors du déclenchement de l'airbag latéral (5), celui-ci sectionne le tuyau de drainage de l'eau dans la zone du canal à forte pente (6, 16).

2. Dispositif de drainage de l'eau selon la revendication 1, **caractérisé en ce que** le canal à forte pente (16) présente un profil en forme de U en coupe transversale avec des ouvertures de passage (19, 21) pour le tuyau de drainage de l'eau, dans lesquelles est inséré un raccord de tuyau (18) en forme de manchon, auquel est fixée sur un des côtés une partie du tuyau de drainage de l'eau (13, 14) en provenance du toit du véhicule, et sur l'autre côté une partie allant vers la partie latérale du véhicule, et qui présente un emplacement destiné à la rupture (22) situé dans le canal à forte pente (16) entre les parties fixées (13, 14) du tuyau de drainage de l'eau.

3. Tuyau de drainage de l'eau selon la revendication 2, **caractérisé en ce que** le raccord de tuyau (18) est une pièce usinée possédant une gorge de retenue (20) pour l'insertion dans une ouverture de passage (19) du profil du canal à forte pente (16).

4. Dispositif de drainage d'eau selon la revendication 1, **caractérisé en ce qu'**un manchon de tuyau (9) est aménagé sur le canal à forte pente (6) en-dessous de l'ouverture de sortie prévue pour l'airbag latéral (5) en guise de raccord de tuyau, auquel sont fixées de manière détachable des deux côtés des parties (13, 14) du tuyau de drainage de l'eau du dispositif de drainage d'eau.

5. Dispositif de drainage d'eau selon la revendication 4, **caractérisé en ce que** le manchon de tuyau (9) est fixé de manière à pouvoir pivoter.

6. Dispositif de drainage d'eau selon la revendication 5, **caractérisé en ce qu'**une languette (10) élastique dépasse sur le manchon de tuyau (9) dans la zone médiane de la surface de son enveloppe, par laquelle le manchon de tuyau (9) est fixé au profil (11) du canal à forte pente (6).

7. Dispositif de drainage d'eau selon l'une quelconque des revendications 2 à 6, **caractérisé en ce que** le raccord de tuyau (9, 18) se compose de caoutchouc ou d'une autre matière élastique.
